# FASCICULE DE BREVET EUROPEEN

(11) **EP 1 196 422 B1**
(45) Date de publication et mention de la délivrance du brevet: **29.10.2003**
(21) Numéro de dépôt: 00945991.8
(22) Date de dépôt: 23.06.2000
(51) Int. Cl.: C07F 5/00, C08G 63/08

(54) **CATALYSEURS DE POLYMERISATION**
POLYMERISATIONSKATALYSATOREN
POLYMERISATION CATALYSTS

(30) Priorité: 25.06.1999 EP 99401584
(43) Date de publication de la demande: 17.04.2002
(73) Titulaire: SOCIETE DE CONSEILS DE RECHERCHES ET D'APPLICATIONS SCIENTIFIQUES (S.C.R.A.S.), 75016 Paris (FR); CENTRE NATIONAL DE LA RECHERCHE SCIENTIFIQUE (CNRS), 75794 Paris Cedex 16 (FR)
(72) Inventeur: DUMITRESCU, Anca, Cité Universitaire de Rangueil, F-31062 Toulouse (FR); GORNITZKA, Heinz, F-31400 Toulouse (FR); MARTIN-VACA, Blanca, F-31400 Toulouse (FR); BOURISSOU, Didier, F-31830 Plaisance du Touch (FR); BERTRAND, Guy, F-31320 Pechbusque (FR); CAZAUX, Jean-Bernard, F-30390 Aramon (FR)
(74) Mandataire: Bourgouin, André
(86) Numéro de dépôt international: FR0001752
(87) Numéro de publication internationale: WO01000630

(56) Documents cités:
- HUBERT-PFALZGRAF, L.G. ET AL.: "synthesis and characterization of volatile cerium(IV) hexafluoroisopropoxide complexes. Structure of (hpmdien)2Ce(och(cf3)2)6" JOURNAL OF THE CHEMICAL SOCIETY, DALTON TRANSACTACTION, 1982, pages 1929-1932, XP002119069
- BRITOVSEK, G.J.P. ET AL.: "the search for new-generation olefin polymerization catalysts: life beyond metallocenes" ANGEWANDTE CHEMIE INTERNATIONAL EDITION, ENGLISH, 1999, pages 428-447, XP002119070 cité dans la demande

## Description

La présente invention concerne de nouveaux composés possédant un lanthanide et possédant un ligand tridentate, un procédé pour leur préparation et leur utilisation notamment en tant que catalyseurs de polymérisation.

On connaît l'utilisation des dérivés des lanthanides comme catalyseurs pour la polymérisation et la copolymérisation d'oléfines (Gibson et coll., Angew. Chem., Int. Ed. Engl., (1999) 38, 428) et d'hétérocycles (Yao et coll., J. Polymer. Sci. Part A : Polymer Chem., (1996) 34, 1799). Des systèmes catalytiques constitués d'un élèment du groupe 13 et d'un ligand tridentate sont décrits dans WO97/42197.

Cependant il a été montré que chaque type de catalyseurs utilisés pour les polymérisations ou copolymérisations, donne respectivement des polymères ou des copolymères différents notamment en raison de réactions de transestérification qui conduisent à des inversions des centres stéréogènes (Jedlinski et coll., Macromolecules, (1990) 191, 2287 ; Munson et coll., Macromolecules, (1996) 29, 8844 ; Montaudo et coll., Macromolecules, (1996) 29, 6461). Le problème est donc de trouver des systèmes catalytiques nouveaux afin d'obtenir de nouveaux polymères ou copolymères, et plus particulièrement des copolymères séquencés. L'utilisation de systèmes catalytiques permettant d'obtenir des copolymères séquencés, permet le contrôle de l'enchaînement des monomères afin d'obtenir des copolymères spécifiques possédant des propriétés propres. Ceci est particulièrement intéressant pour les copolymères biocompatibles dont la biodégradation est influencée par cet enchaînement.

L'invention a ainsi pour objet les produits de formule générale 1 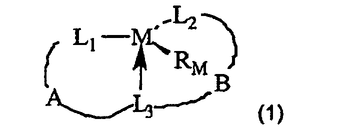 dans laquelle
- M: représente un lanthanide ;
- R_{M}: représente l'atome d'hydrogène, un atome d'halogène ou un radical alkyle, cycloalkyle, aryle, alkoxy, cycloalkoxy, aryloxy, alkylthio, cycloalkylthio, arylthio, amino, alkylamino, dialkylamino, cycloalkylamino, di(cycloalkyl)amino, alkyl(cycloalkyl)amino, arylamino, diarylamino, alkylarylamino ou (cycloalkyl)arylarnino ;
- A et B: représentent, indépendamment, une chaîne carbonée de 2 à 4 atomes de carbone, optionellement substituée par l'un des radicaux substitués (par un ou plusieurs substituants identiques ou différents) ou non substitués suivants : alkyle, cycloalkyle ou aryle, dans lesquels ledit substituant est un atome d'halogène, le radical alkyle, nitro ou cyano ;
- L₁, L₂ et L₃: représentent, indépendamment, un groupe de formule -E₁₅(R₁₅)- dans laquelle
E₁₅ est un élément du groupe 15 et
R₁₅ représente l'atome d'hydrogène ; l'un des radicaux substitués (par un ou plusieurs substituants identiques ou différents) ou non-substitués suivants : alkyle, cycloalkyle ou aryle, dans lesquels ledit substituant est un atome d'halogène, le radical alkyle, nitro ou cyano; un radical de formule -E₁₄RR'R" dans laquelle E₁₄ est un élément du groupe 14 et R, R' et R" représentent, indépendamment, l'atome d'hydrogène ou l'un des radicaux substitués (par un ou plusieurs substituants identiques ou différents) ou non-substitués suivants : alkyle, cycloalkyle, aryle, alkoxy, cycloalkoxy, aryloxy, alkylthio, cycloalkylthio ou arylthio, dans lesquels ledit substituant est un atome d'halogène, le radical alkyle, nitro ou cyano ; ou un radical de formule -SO₂R'₁₅ dans laquelle R'₁₅ représente un atome d'halogène, un radical alkyle, haloalkyle ou aryle éventuellement substitué par un ou plusieurs substituants choisis parmi les radicaux alkyle, haloalkyle et halogène.

Dans les définitions indiquées ci-dessus, l'expression halogène représente un atome de fluor, de chlore, de brome ou d'iode, de préférence chlore. L'expression alkyle représente de préférence un radical alkyle ayant de 1 à 6 atomes de carbone linéaire ou ramifié et en particulier un radical alkyle ayant de 1 à 4 atomes de carbone tels que les radicaux méthyle, éthyle, propyle, isopropyle, butyle, isobutyle, sec-butyle et tert-butyle.

Le terme haloalkyle désigne de préférence les radicaux dans lesquels le radical alkyle est tel que défini ci-dessus et est substitué par un ou plusieurs atomes d'halogène tel que défini ci-dessus comme, par exemple, bromoéthyle, trifluorométhyle, trifluoroéthyle ou encore pentafluoroéthyle. Les radicaux alkoxy peuvent correspondre aux radicaux dans lesquels le radical alkyle est tel que défini ci-dessus. On préfère les radicaux méthoxy, éthoxy, isopropyloxy ou tert-butyloxy. Les radicaux alkylthio représentent de préférence les radicaux dans lesquels le radical alkyle est tel que défini ci-dessus comme, par exemple, méthylthio ou éthylthio. Les radicaux alkylamino et dialkylamino représentent de préférence les radicaux dans lesquels le radical alkyle est tel que défini ci-dessus comme, par exemple, méthylamino ou diméthylamino.

Les radicaux cycloalkyles sont choisis parmi les cycloalkyles monocycliques saturés ou insaturés. Les radicaux cycloalkyles monocycliques saturés peuvent être choisis parmi les radicaux ayant de 3 à 7 atomes de carbone tels que les radicaux cyclopropyle, cyclobutyle, cyclopentyle, cyclohexyle ou cycloheptyle. Les radicaux cycloalkyles insaturés peuvent être choisis parmi les radicaux cyclobutène, cyclopentène, cyclohexène, cyclopentadiène, cyclohexadiène. Les radicaux cycloalkoxy peuvent correspondre aux radicaux dans lesquels le radical cycloalkyle est tel que défini ci-dessus. On préfère les radicaux cyclopropyloxy, cyclopentyloxy ou cyclohexyloxy. Les radicaux cycloalkylthio peuvent correspondre aux radicaux dans lesquels le radical cycloalkyle est tel que défini ci-dessus comme par exemple cyclohexylthio. Les radicaux cycloalkylamino et di(cycloalkyl)amino peuvent correspondre aux radicaux dans lesquels le radical cycloalkyle est tel que défini ci-dessus comme par exemple cyclohexylamino et di(cyclohexyl)amino.

Les radicaux aryles peuvent être de type mono ou polycycliques. Les radicaux aryles monocycliques peuvent être choisis parmi les radicaux phényle optionellement substitué par un ou plusieurs radicaux alkyle, tels que tolyle, xylyle, mésityle, cuményle. Les radicaux aryles polycycliques peuvent être choisis parmi les radicaux naphtyle, anthryle, phénanthryle. Les radicaux aryloxy peuvent correspondre aux radicaux dans lesquels le radical aryle est tel que défini ci-dessus. On préfère les radicaux phénoxy, 2,4,6-tritertiobutylphénoxy, tolyloxy ou mésityloxy. Les radicaux arylthio désignent de préférence les radicaux dans lesquels le radical aryle est tel que défini ci-dessus comme par exemple dans phénylthio. Les radicaux arylamino et diarylamino désignent de préférence les radicaux dans lesquels le radical aryle est tel que défini ci-dessus comme, par exemple, phénylamino ou diphénylamino.

Les radicaux alkyl(cycloalkyl)amino peuvent correspondre aux radicaux dans lesquels les radicaux alkyle et cycloalkyle sont tels que définis ci-dessus comme, par exemple méthyl(cyclohexyl)amino. Les radicaux alkylarylamino désignent de préférence les radicaux dans lesquels les radicaux alkyle et aryle sont tels que définis ci-dessus comme, par exemple méthylphénylamino. Les radicaux (cycloalkyl)arylamino peuvent correspondre aux radicaux dans lesquels les radicaux cycloalkyle et aryle sont tels que définis ci-dessus comme, par exemple (cyclohexyl)phénylamino.

Les composés de formule 1 peuvent se présenter sous forme de monomère ou de dimère et plus particulièrement les composés de formule 1 dans laquelle M représente un atome de samarium se présentent généralement sous forme de dimère.

L'invention a plus particulièrement pour objet les produits de formule générale 1 telle que définie ci-dessus, caractérisée en ce que
R_{M} représente un atome d'halogène ;
A et B représentent, indépendamment, une chaîne carbonée de 2 à 4 atomes de carbone ;
L₁, L₂ et L₃ représentent, indépendamment, un radical de formule -E₁₅(R₁₅)- dans laquelle E₁₅ est un atome d'azote ou de phosphore et R₁₅ représente un radical alkyle ou un radical de formule -E₁₄RR'R" dans laquelle E₁₄ représente un atome de carbone ou de silicium et R, R' et R" représentent, indépendamment, l'atome d'hydrogène ou un radical alkyle.

De préférence, M représente un atome de samarium. De préférence également, R_{M} représente un atome de chlore ; A et B représentent, indépendamment, une chaîne carbonée de 2 atomes de carbone ; L₁, L₂ et L₃ représentent, indépendamment, un radical de formule -E₁₅(R₁₅)- dans laquelle E₁₅ est un atome d'azote et R₁₅ représente un radical méthyle, éthyle, propyle, isopropyle ou un radical de formule -E₁₄RR'R" dans laquelle E₁₄ représente un atome de silicium et R, R' et R" représentent, indépendamment, l'atome d'hydrogène ou un radical méthyle, éthyle, propyle ou isopropyle.

Plus particulièrement, l'invention a pour objet le produit décrit ci-après dans les exemples, notamment le produit répondant à la formule suivante :

- [(Me₃SiNCH₂CH₂)₂NMe]SmCl.

L'invention a également pour objet un procédé de préparation des produits de formule générale 1 telle que définie ci-dessus, caractérisé en ce que l'on fait réagir un produit de formule I

(L₁-A-L₃-B-L₂)²⁻, 2Y⁺ (I)

dans laquelle L₁, A, L₃, B et L₂ ont les significations indiquées ci-dessus et Y représente l'atome d'hydrogène, un métal ou un groupement organométallique, avec un produit de formule II

MR_{M}Z₁Z₂ (II)

dans laquelle M et R_{M} ont les significations indiquées ci-dessus et Z₁ et Z₂ représentent, indépendamment, un groupe partant, pour obtenir un produit de formule 1 telle que définie ci-dessus.

La réaction d'un composé de formule générale I avec un composé de formule générale II pour obtenir un composé de formule générale 1, peut être réalisée sous atmosphère inerte telle sous atmosphère de fréon ou d'argon, dans un solvant aprotique, à une température comprise entre -90 et +50° C. Les composés 1 ainsi obtenus sont purifiés par les méthodes classiques de purification.

En tant que solvant aprotique, on peut utiliser les hydrocarbures aromatiques tels que benzène, toluène; des hydrocarbures aliphatiques tels que pentane, heptane, hexane, cyclohexane ; des éthers tels que le diéthyléther, dioxane, tétrahydrofurane, éthyltertiobutyl éther.

Les composés de formule 1 peuvent comporter une ou plusieurs molécules de solvant coordinant utilisé lors du procédé de préparation. L'expression solvant coordinant représente un hydrocarbure aromatique tel que benzène, toluène ; un dialkyle éther cyclique ou acyclique tels que le diéthyléther, dioxane, tétrahydrofurane, éthyltertiobutyléther ; un solvant chloré tels que dichlorométhane, chloroforme ; un nitrile aliphatique ou aromatique tels que acétonitrile, benzonitrile ; une cétone aliphatique ou aromatique, cyclique ou acyclique tels que acétone, acétophénone, cyclohexanone ; un dérivé d'acide carboxylique aliphatique ou aromatique, cyclique ou acyclique tels que acétate d'éthyle, diméthylformamide.

Dans les composés I, Y représente l'atome d'hydrogène, un métal ou un groupement métallique. Le groupement métallique est un composé de formule R"'M₁ ou R"'₃M₂ dans laquelle R"' représente un atome d'halogène ou indifféremment un radical alkyle, cycloalkyle, aryle, alkoxy, cycloalkoxy ou aryloxy définis comme précédemment, M₁ est un alcalino-terreux tel que le magnésium ou un atome de zinc ou de mercure et M₂ un atome d'étain ou de plomb ; de préférence, le groupement métallique est choisi parmi les groupements MgBr, ZnMe, SnMe₃, SnBu₃ ou PbMe₃. Le métal peut être un métal alcalin choisi parmi le lithium, le sodium ou le potassium.

Dans les composés II, Z₁ et Z₂ représentent, indépendamment un groupe partant choisi parmi un atome d'halogène, un groupement alkyle, cycloalkyle, alkoxy, aryle ou aryloxy défini comme précédemment, ou encore un méthanesulphonyloxy, un benzènesulphonyloxy, p-toluènesulphonyloxy.

Les produits de départ de formule I sont des produits connus ou peuvent être préparés à partir de produits connus. Pour leur synthèse, on peut citer les références suivantes : Cloke et coll., J. Chem. Soc., Dalton Trans. (1995) 25; Wilkinson and Stone, Comprehensive Organometallic Chemistry (1982) vol. 1, 557.

Les produits de formule II sont commerciaux ou peuvent être fabriqués par les méthodes connues de l'homme de métier.

L'invention a également pour objet l'utilisation des produits de formule 1 telle que définie ci-dessus, en tant que catalyseurs pour la mise en oeuvre de (co)polymérisation, c'est à dire de polymérisation ou copolymérisation. Lors de la mise en oeuvre de (co)polymérisation, les composés selon l'invention jouent également le rôle d'initiateur et/ou de régulateur de chaînes.

Les composés de formule 1 sont particulièrement intéressants pour la mise en oeuvre de polymérisation d'hétérocycles. Les hétérocycles peuvent contenir un ou plusieurs hétéroatomes des groupes 15 et/ou 16, et posséder une taille allant de trois à huit chaînons. A titre d'exemple d'hétérocycles répondant à la formulation ci-avant, on peut citer les époxydes, les thioépoxydes, les esters ou thioesters cycliques tels que les lactones, les lactames et les anhydrides.

Les composés de formule 1 sont particulièrement intéressants également pour la mise en oeuvre de (co)polymérisation d'esters cycliques. A titre d'exemple d'esters cycliques, on peut citer les esters cycliques polymères de l'acide lactique et/ou glycolique. Des copolymères statistiques ou séquencés peuvent être obtenus selon que les monomères sont introduits ensemble au début de la réaction, ou séquentiellement au cours de la réaction.

L'invention a également pour objet un procédé de préparation de copolymères, séquencés ou aléatoires, ou de polymères qui consiste à mettre en présence un ou plusieurs monomères, un initiateur et/ou un régulateur de chaînes, un catalyseur de polymérisation et éventuellement un solvant de polymérisation, le dit procédé caractérisé en ce que l'initiateur et/ou le régulateur de chaînes et le catalyseur de polymérisation sont représentés par le même composé qui est choisi parmi les composés de formule (1) telle que définie ci-dessus.

La (co)polymérisation peut s'effectuer soit en solution soit en surfusion. Lorsque la (co)polymérisation s'effectue en solution, le solvant de la réaction peut être le (ou l'un des) substrat(s) mis en oeuvre dans la réaction catalytique. Des solvants qui n'interfèrent pas avec la réaction catalytique elle-même, conviennent également. A titre d'exemple de tels solvants, on peut citer les hydrocarbures saturés ou aromatiques, les éthers, les halogénures aliphatiques ou aromatiques.

Les réactions sont conduites à des températures comprises entre la température ambiante et environ 250° C ; la plage de température comprise entre 40 et 200° C s'avère plus avantageuse. Les durées de réaction sont comprises entre quelques minutes et 300 heures, et de préférence entre 5 minutes et 72 heures.

Ce procédé de (co)polymérisation convient particulièrement bien pour l'obtention de (co)polymères d'esters cycliques, notamment les esters cycliques polymères de l'acide lactique et/ou glycolique. Les produits obtenus tels que le copolymère lactique glycolique, biodégradables, sont avantageusement utilisés comme support dans des compositions thérapeutiques à libération prolongée. Le procédé convient particulièrement bien également à la polymérisation des époxydes, notamment de l'oxyde de propène. Les polymères obtenus sont des composés qui peuvent être utilisés pour la synthèse de cristaux liquides organiques ou encore comme membranes semi-perméables.

La polydispersité (Mw/Mn) des (co)polymères ainsi obtenus peut être modifiée en laissant le mélange réactionnel à la température de la réaction après que la conversion du (des) monomère(s) soit totale. Les masses des (co)polymères sont peu affectées lors de ce processus. Ces phénomènes sont dus à des réactions de transestérifications inter- ou intra-moléculaires (Kiecheldorf et coll., Macromolecules, (1988) 21, 286).

Les exemples suivants sont présentés pour illustrer les procédures ci-dessus.

### Exemple 1 : [(Me₃SiNCH₂CH₂)₂NMe]SmCl (sous forme de dimère avec une molécule de tétrahydrofurane coordinée sur chaque centre métallique)

### M = Sm ; R_{M} = Cl ; A = B = -CH₂CH₂- ; L₁ = L₂ = NSiMe₃ ; L₃ = NMe

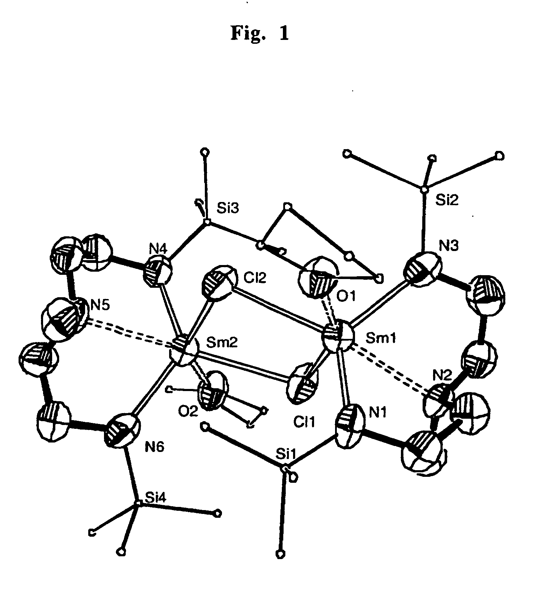

Dans un tube de Schlenk muni d'un barreau aimanté et purgé sous argon, on introduit successivement 1,22 g (4,7 mmol) de [(Me₃SiNCH₂CH₂)₂NMe]²⁻, 2Li⁺ et 10 ml de tétrahydrofurane. Le mélange réactionnel est refroidi à -78° C, puis on introduit une suspension de 1,20 g (4,7 mmol) de SmCl₃ dans du tétrahydrofurane. Le mélange réactionnel est ramené à température ambiante puis laissé sous agitation pendant 4 heures à température ambiante. Après évaporation du solvant, le résidu est repris au toluène puis filtré. Après évaporation du solvant, un solide blanc est obtenu. Le composé souhaité est isolé sous forme de cristaux blancs par cristallisation à -20° C dans du toluène (5 ml) (rendement 70 %). Ce composé est caractérisé par spectroscopie de résonnance magnétique multinucléaire et diffraction des rayons-X (Figure 1 et Tableau 1 ci-dessous). Point de fusion : 173° C.

### Exemple 2 : Préparation d'un copolymère (D,L-lactide / glycolide) aléatoire ayant une composition lactide/ glycolide proche de 70/30

Dans un tube de Schlenk muni d'un barreau aimanté et purgé sous argon, on introduit successivement 0,05 g (0,1 mmol) de [(Me₃SiNCH₂CH₂)₂NMe]SmCl, 2,1 g (14,6 mmol) de D,L-lactide et 0,72 g (6,2 mmol) de glycolide. Le mélange réactionnel est laissé sous agitation à 180° C pendant 1 heure. Une analyse par RMN du proton permet de vérifier que la conversion des monomère est de 93 % de lactide et 94 % de glycolide. Le rapport des intégrales des signaux correspondant à la partie polylactide (5,20 ppm) et polyglycolide (4,85 ppm) permet d'évaluer la composition du copolymère à 66 % de lactide et 34 % de glycolide. Selon une analyse par GPC, à l'aide d'un étalonnage réalisé à partir de standards de PS de masses 761 à 400000, ce copolymère est un mélange de macromolécules (Mw/Mn = 2,95) de masses assez élevées (Mw = 37500 Dalton).

### Exemple 3 : Préparation d'un copolymère (D,L-lactide / glycolide) aléatoire ayant une composition lactide/ glycolide proche de 50/50

Dans un tube de Schlenk muni d'un barreau aimanté et purgé sous argon, on introduit successivement 40 mg (0,08 mmol) de [(Me₃SiNCH₂CH₂)₂NMe]SmCl, 1,87 g (13 mmol) de D,L-lactide et 1,48 g (13 mmol) de glycolide et 4 ml de mesitylène. Le mélange réactionnel est laissé sous agitation à 180° C pendant 4 heures. Une analyse par RMN du proton permet de vérifier que la conversion des monomères est de 100 % de lactide et de 100 % de glycolide. Le rapport des intégrales des signaux correspondant à la partie polylactide (5,20 ppm) et polyglycolide (4,85 ppm) permet d'évaluer la composition du copolymère à 50 % de lactide et 50 % de glycolide. Selon une analyse par GPC, à l'aide d'un étalonnage réalisé à partir de standards de PS de masses 761 à 400 000, ce copolymère est un mélange de macromolécules (Mw/Mn = 1,53) de masses élevées (Mw = 34000 Dalton).

### Exemple 4 : Préparation d'un copolymère (D,L-lactide / glycolide) aléatoire de masses élevées

Dans un tube de Schlenk muni d'un barreau aimanté et purgé sous argon, on introduit successivement 0,05 g (0,1 mmol) de [(Me₃SiNCH₂CH₂)₂NMe]SmCl, 2,1 g (14,6 mmol) de D,L-lactide et 0,72 g (6,2 mmol) de glycolide. Le mélange réactionnel est laissé sous agitation à 160° C pendant 30 minutes. Une analyse par RMN du proton permet de vérifier que la conversion des monomères est de 71 % de lactide et 100 % de glycolide. Le rapport des intégrales des signaux correspondants à la partie polylactide (5,20 ppm) et polyglycolide (4,85 ppm) permet d'évaluer la composition du copolymère à 61 % de lactide et 39 % de glycolide. Selon une analyse par GPC, à l'aide d'un étalonnage réalisé à partir de standards de PS de masses 761 à 400000, ce copolymère est un mélange de macromolécules (Mw/Mn = 1,56) de masses élevées (Mw = 169000 Dalton).

### Exemple 5 : Modification de la composition, de la masse et de la polydispersité d'un copolymère (D,L-lactide / glycolide)

Dans un tube de Schlenk muni d'un barreau aimanté et purgé sous argon, on introduit successivement 0,050 g (0,1 mmol) de [(Me₃SiNCH₂CH₂)₂NMe]SmCl, 2,095 g (10,1 mmol) de D,L-lactide et 1,68 g (10,1 mmol) de glycolide. Le mélange réactionnel est laissé sous agitation à 160° C. Après 1 heure, la conversion des monomères est de 44 % de lactide et 100 % de glycolide selon une analyse par RMN du proton et le rapport des intégrales des signaux correspondants à la partie polylactide (5,20 ppm) et polyglycolide (4,85 ppm) permet d'évaluer la composition du copolymère à 42 % de lactide et 58 % de glycolide. Selon une analyse par GPC, à l'aide d'un étalonnage réalisé à partir de standards de PS de masses 761 à 400000, ce copolymère est un mélange de macromolécules (Mw/Mn = 1,73) de masses assez élevées (Mw = 28265 Dalton). Après 2 heures 30 minutes de plus à 160° C, la conversion de lactide atteint 96 %. La composition du copolymère est alors 49 % de lactide et 51 % de glycolide. L'analyse GPC d'un aliquot montre que la dispersité et la masse ont augmenté (Mw/Mn = 1,84 ; Mw = 47200 Dalton).

**Tableau 1 :**

| **Longueur des liaisons sélectionnées (en Angström) et angles de liaison (en degré) pour le composé de l'exemple 1** | | | |
|---|---|---|---|
| Sm(1)-N(1) | 2,290 (12) Å | N(2)-C(6) | 1,516 (17) Å |
| Sm(1)-N(2) | 2,574 (9) Å | N(2)-C(7) | 1,482 (17) Å |
| Sm(1)-N(3) | 2,299 (12) Å | C(7)-C(8) | 1,50 (2) Å |
| N(1)-Si(1) | 1,678 (12) Å | C(8)-N(3) | 1,461 (18) Å |
| N(3)-Si(2) | 1,695 (12) Å | Sm(1)-O(1) | 2,519 (8) Å |
| N(1)-C(4) | 1,494 (17) Å | Sm(1)-Cl(1) | 2,773 (3) Å |
| C(4)-C(5) | 1,508 (19) Å | Sm(1)-Cl(2) | 2,797 (3) Å |
| C(5)-N(2) | 1,470 (16) Å | | |
| N(1)-Sm(1)-N(2) | 68,9(3)° | Sm(1)-N(1)-C(4) | 116,5(8)° |
| N(2)-Sm(1)-N(3) | 71,5(4)° | Sm(1)-N(3)-C(8) | 118,7(9)° |
| N(1)-Sm(1)-N(3) | 124,1(4)° | Sm(1)-N(2)-C(5) | 97,7(7)° |
| N(1)-Sm(1)-Cl(1) | 104,0(3)° | Sm(1)-N(2)-C(6) | 121,1(8)° |
| N(1)-Sm(1)-Cl(2) | 122,1(3)° | Sm(1)-N(2)-C(7) | 107,0(7)° |

## Revendications

1. Composés de formule générale 1 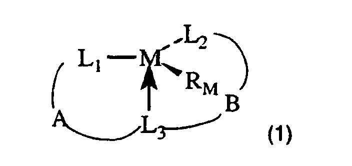 dans laquelle
M représente un lanthanide ;
R_{M} représente l'atome d'hydrogène, un atome d'halogène ou un radical alkyle, cycloalkyle, aryle, alkoxy, cycloalkoxy, aryloxy, alkylthio, cycloalkylthio, arylthio, amino, alkylamino, dialkylamino, cycloalkylamino, di(cycloalkyl)amino, alkyl(cycloalkyl)amino, arylamino, diarylamino, alkylarylamino ou (cycloalkyl)arylamino ;
A et B représentent, indépendamment, une chaîne carbonée de 2 à 4 atomes de carbone, optionellement substituée par l'un des radicaux substitués (par un ou plusieurs substituants identiques ou différents) ou non substitués suivants : alkyle, cycloalkyle ou aryle, dans lesquels ledit substituant est un atome d'halogène, le radical alkyle, nitro ou cyano ;
L₁, L₂ et L₃ représentent, indépendamment, un groupe de formule -E₁₅(R₁₅)- dans laquelle
E₁₅ est un élément du groupe 15 et
R₁₅ représente l'atome d'hydrogène ; l'un des radicaux substitués (par un ou plusieurs substituants identiques ou différents) ou non-substitués suivants : alkyle, cycloalkyle ou aryle, dans lesquels ledit substituant est un atome d'halogène, le radical alkyle, nitro ou cyano; un radical de formule -E₁₄RR'R" dans laquelle E₁₄ est un élément du groupe 14 et R, R' et R" représentent, indépendamment, l'atome d'hydrogène ou l'un des radicaux substitués (par un ou plusieurs substituants identiques ou différents) ou non-substitués suivants : alkyle, cycloalkyle, aryle, alkoxy, cycloalkoxy, aryloxy, alkylthio, cycloalkylthio ou arylthio, dans lesquels ledit substituant est un atome d'halogène, le radical alkyle, nitro ou cyano ; ou un radical de formule -SO₂R'₁₅ dans laquelle R'₁₅ représente un atome d'halogène, un radical alkyle, haloalkyle ou aryle éventuellement substitué par un ou plusieurs substituants choisis parmi les radicaux alkyle, haloalkyle et halogène.

2. Composés de formule générale 1 telle que définie à la revendication 1, **caractérisés en ce qu'**ils se présentent sous forme de monomère ou dimère.

3. Composés de formule générale 1 telle que définie à l'une des revendications 1 à 2, **caractérisés en ce que**
R_{M} représente un atome d'halogène ;
A et B représentent, indépendamment, une chaîne carbonée de 2 à 4 atomes de carbone ;
L₁, L₂ et L₃ représentent, indépendamment, un radical de formule -E₁₅(R₁₅)- dans laquelle E₁₅ est un atome d'azote ou de phosphore et R₁₅ représente un radical alkyle ou un radical de formule -E₁₄RR'R" dans laquelle E₁₄ représente un atome de carbone ou de silicium et R, R' et R" représentent, indépendamment, l'atome d'hydrogène ou un radical alkyle.

4. Composés de formule générale 1 telle que définie à l'une des revendications 1 à 3, **caractérisés en ce que** M représente un atome de samarium.

5. Composés de formule générale 1 telle que définie à l'une des revendications 1 à 4, **caractérisés en ce que** R_{M} représente un atome de chlore ; A et B représentent, indépendamment, une chaîne carbonée de 2 atomes de carbone ; L₁, L₂ et L₃ représentent, indépendamment, un radical de formule -E₁₅(R₁₅)- dans laquelle E₁₅ est un atome d'azote et R₁₅ représente un radical méthyle, éthyle, propyle, isopropyle ou un radical de formule -E₁₄RR'R" dans laquelle E₁₄ représente un atome de silicium et R, R' et R" représentent, indépendamment, l'atome d'hydrogène ou un radical méthyle, éthyle, propyle ou isopropyle.

6. Composés de formule générale 1 telle que définie à l'un des revendications 1 à 5 et répondant à la formule suivante :
- [(Me₃SiNCH₂CH₂)₂NMe]SmCl.

7. Composés de formule générale 1 telle que définie à la revendication 6, **caractérisés en ce qu'**ils se présentent sous forme de dimère.

8. Procédé de préparation des produits de formule générale 1 telle que définie à la revendication 1, **caractérisé en ce que** l'on fait réagir un produit de formule I
(L₁-A-L₃-B-L₂)²⁻, 2Y⁺ (I)
dans laquelle L₁, A, L₃, B et L₂ ont les significations indiquées à la revendication 1 et Y représente l'atome d'hydrogène, un métal ou un groupement organométallique de formule R'''M₁ ou R'''₃M₂ dans laquelle R"' représente un atome d'halogène ou un radical alkyle, cycloalkyle, aryle, alkoxy, cycloalkoxy ou aryloxy, M₁ est un alcalino-terreux ou un atome de zinc ou de mercure et M₂ un atome d'étain ou de plomb, avec un produit de formule II
MR_{M}Z₁Z₂ (II)
dans laquelle M et R_{M} ont les significations indiquées à la revendication 1 et Z₁ et Z₂ représentent, indépendamment, un groupe partant choisi parmi un atome d'halogène, un groupement alkyle, cycloalkyle, alkoxy, aryle, aryloxy, méthanesulphonyloxy, benzènesulphonyloxy, p-toluènesulphonyloxy, pour obtenir un produit de formule 1.

9. Utilisation des produits de formule 1 telle que définie à l'une des revendications 1 à 7, en tant que catalyseurs de polymérisation ou copolymérisation.

10. Utilisation selon la revendication 9 pour la polymérisation ou copolymérisation d'hétérocycles.

11. Utilisation selon la revendication 9 pour la polymérisation ou copolymérisation d'esters cycliques.

12. Utilisation selon la revendication 11 pour la polymérisation ou copolymérisation d'esters cycliques polymères de l'acide lactique et/ou glycolique.

13. Procédé de préparation de copolymères, séquencés ou aléatoires, ou de polymères qui consiste à mettre en présence un ou plusieurs monomères, un initiateur et/ou un régulateur de chaînes, un catalyseur de polymérisation et éventuellement un solvant de polymérisation, le dit procédé **caractérisé en ce que** l'initiateur et/ou le régulateur, de chaînes et le catalyseur de polymérisation sont représentés par le même composé qui est choisi parmi les composés de formule (1) telle que définie à l'une des revendications 1 à 7.

14. Procédé selon la revendication 13, **caractérisé en ce que** le monomère est choisi parmi les époxydes ou les esters cycliques.

15. Procédé selon la revendication 14, **caractérisé en ce que** le monomère est choisi parmi les esters cycliques de l'acide lactique et/ou glycolique.

## Patentansprüche

1. Verbindung der allgemeinen Formel 1 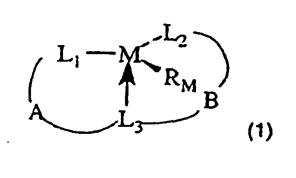 in der
M ein Lanthanid darstellt;
R_{M} ein Wasserstoffatom, ein Halogenatom oder einen der Reste Alkyl, Cycloalkyl, Aryl, Alkoxy, Cycloalkoxy, Aryloxy, Alkylthio, Cycloalkylthio, Arylthio, Amino, Alkylamino, Dialkylamino, Cycloalkylamino, Di(cycloalkyl)amino, Alkyl(cycloalkyl)amino, Arylamino, Diarylamino, Alkylarylamino oder (Cycloalkyl)arylamino darstellt;
A und B unabhängig voneinander eine kohlenstoffhaltige Kette mit 2 bis 4 Kohlenstoffatomen darstellen, die gegebenenfalls durch einen der folgenden (durch einen oder mehrere gleiche oder verschiedene Substituenten) substituierten oder nicht substituierten Reste substituiert ist: Alkyl, Cycloalkyl oder Aryl, in denen dieser Substituent ein Halogenatom oder ein Alkyl-, Nitro- oder Cyanrest ist;
L₁, L₂ und L₃ unabhängig voneinander eine Gruppe der Formel -E₁₅(R₁₅)- darstellen, in der
E₁₅ ein Element der Gruppe 15 ist und
R₁₅ darstellt: ein Wasserstoffatom; einen der folgenden (durch einen oder mehrere gleiche oder verschiedene Substituenten) substituierten oder nicht substituierten Reste: Alkyl, Cycloalkyl oder Aryl, in denen dieser Substituent ein Halogenatom oder ein Alkyl-, Nitro- oder Cyanrest ist; einen Rest der Formel -E₁₄RR'R", in der E₁₄ ein Element der Gruppe 14 ist und R, R' und R" unabhängig voneinander ein Wasserstoffatom oder einen der folgenden (durch einen oder mehrere gleiche oder verschiedene Substituenten) substituierten oder nicht substituierten Reste darstellen: Alkyl, Cycloalkyl, Aryl, Alkoxy, Cycloalkoxy, Aryloxy, Alkylthio, Cycloalkylthio oder Arylthio, in denen dieser Substituent ein Halogenatom oder ein Alkyl-, Nitro- oder Cyanrest ist; oder einen Rest der Formel -SO₂R'₁₅, in der R'₁₅ ein Halogenatom oder einen Alkyl-, Halogenalkyl- oder Arylrest darstellt, der ggf. durch einen oder mehrere Substituenten substituiert ist, die aus den Resten Alkyl, Halogenalkyl und Halogen ausgewählt sind.

2. Verbindungen der allgemeinen Formel 1 gemäß Anspruch 1, **dadurch gekennzeichnet, daß** sie in Monomer- oder Dimerform vorliegen.

3. Verbindungen der allgemeinen Formel 1 gemäß einem der Ansprüche 1 bis 2, **dadurch gekennzeichnet, daß**
R_{M} ein Halogenatom darstellt;
A und B unabhängig voneinander eine kohlenstoffhaltige Kette von 2 bis 4 Kohlenstoffatomen darstellen;
L₁, L₂ und L₃ unabhängig voneinander einen Rest der Formel -E₁₅(R₁₅)- darstellen, in der E₁₅ ein Stickstoff- oder Phosphoratom ist und R₁₅ einen Alkylrest oder einen Rest der Formel -E₁₄RR'R" darstellt, in der E₁₄ ein Kohlenstoff- oder Siliciumatom darstellt und R, R' und R" unabhängig voneinander ein Wasserstoffatom oder einen Alkylrest darstellen.

4. Verbindungen der allgemeinen Formel 1 gemäß einem der Ansprüche 1 bis 3, **dadurch gekennzeichnet, daß** M ein Samariumatom darstellt.

5. Verbindungen der allgemeinen Formel 1 gemäß einem der Ansprüche 1 bis 4, **dadurch gekennzeichnet, daß** R_{M} ein Chloratom darstellt; A und B unabhängig voneinander eine kohlenstoffhaltige Kette mit 2 Kohlenstoffatomen darstellen; L₁, L₂ und L₃ unabhängig voneinander einen Rest der Formel -E₁₅(R₁₅)- darstellen, in der E₁₅ ein Stickstoffatom ist und R₁₅ einen der Reste Methyl, Ethyl, Propyl, Isopropyl oder einen Rest der Formel -E₁₄RR'R" darstellt, in der E₁₄ ein Siliciumatom darstellt und R, R' und R" unabhängig voneinander ein Wasserstoffatom oder einen der Reste Methyl, Ethyl, Propyl oder Isopropyl darstellen.

6. Verbindungen der allgemeinen Formel 1 gemäß einem der Ansprüche 1 bis 5, die der folgenden Formel entsprechen:
- [(Me₃SiNCH₂CH₂)₂NMe]SmCl.

7. Verbindungen der allgemeinen Formel 1 gemäß Anspruch 6, **dadurch gekennzeichnet, daß** sie in Dimerform vorliegen.

8. Verfahren zur Herstellung der Produkte der allgemeinen Formel 1 gemäß Anspruch 1, **dadurch gekennzeichnet, daß** man ein Produkt der Formel I
(L₁-A-L₃-B-L₂)²⁻, 2Y⁺ (I)
in der L₁, A, L₃, B und L₂ die in Anspruch 1 angegebenen Bedeutungen haben und Y ein Wasserstoffatom, ein Metall oder eine metallorganische Gruppe der Formel R'''M₁ oder R'''₃M₂ darstellt, in der R''' ein Halogenatom oder einen der Reste Alkyl, Cycloalkyl, Aryl, Alkoxy, Cycloalkoxy oder Aryloxy darstellt, M₁ ein Erdalkali oder ein Zink- oder Quecksilberatom und M₂ ein Zinn- oder Bleiatom ist, mit einem Produkt der Formel II
MR_{M}Z₁Z₂ (II)
in der M und R_{M} die in Anspruch 1 angegebenen Bedeutungen haben und Z₁ und Z₂ unabhängig voneinander eine Abgangsgruppe darstellen, die aus einem Halogenatom und einer der Gruppen Alkyl, Cycloalkyl, Alkoxy, Aryl, Aryloxy, Methansulfonyloxy, Benzolsulfonyloxy, p-Toluolsulfonyloxy ausgewählt ist, reagieren läßt, um ein Produkt der Formel 1 zu erhalten.

9. Verwendung von Produkten der Formel 1 gemäß einem der Ansprüche 1 bis 7 in Form von Polymerisations- oder Copolymerisationskataiysatoren.

10. Verwendung nach Anspruch 9 für die Polymerisation oder Copolymerisation von Heterocyclen.

11. Verwendung nach Anspruch 9 für die Polymerisation oder Copolymerisation von cyclischen Estern.

12. Verwendung nach Anspruch 11 für die Polymerisation oder Copolymerisation von polymeren cyclischen Estern der Milchund/oder Glykolsäure.

13. Verfahren zur Herstellung von Block- oder statistischen Copolymeren oder Polymeren, das darin besteht, daß ein oder mehrere Monomere, ein Initiator und/oder Kettenregler, ein Polymerisationskatalysator und ggf. ein Polymerisationslösungsmittel zusammengebracht werden, wobei dieses Verfahren **dadurch gekennzeichnet ist, daß** der Initiator und/oder der Kettenregler und der Polymerisationskatalysator von derselben Verbindung dargestellt werden, die aus den Verbindungen der Formel (1) gemäß einem der Ansprüche 1 bis 7 ausgewählt ist.

14. Verfahren nach Anspruch 13, **dadurch gekennzeichnet, daß** das Monomer aus den Epoxiden oder den cyclischen Estern ausgewählt ist.

15. Verfahren nach Anspruch 14, **dadurch gekennzeichnet, daß** das Monomer aus den cyclischen Estern der Milch- und/oder Glykolsäure ausgewählt ist.

## Claims

1. Compounds of general formula 1 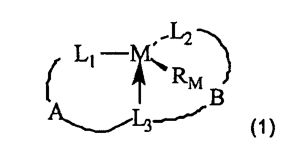 in which
M represents a lanthanide;
R_{M} represents the hydrogen atom, a halogen atom or an alkyl, cycloalkyl, aryl, alkoxy, cycloalkoxy, aryloxy, alkylthio, cycloalkylthio, arylthio, amino, alkylamino, dialkylamino, cycloalkylamino, di(cycloalkyl)amino, alkyl(cycloalkyl)amino, arylamino, diarylamino, alkylarylamino or (cycloalkyl)arylamino radical;
A and B represent, independently, a carbon chain with 2 to 4 carbon atoms, optionally substituted by one of the following substituted (by one or more identical or different substituents) or non-substituted alkyl, cycloalkyl or aryl radicals, in which said substituent is a halogen atom, the alkyl, nitro or cyano radical;
L₁, L₂ and L₃ represent, independently, a group of formula -E₁₅(R₁₅)- in which
E₁₅ is an element of group 15 and
R₁₅ represents the hydrogen atom; one of the following substituted (by one or more identical or different substituents) or non-substituted alkyl, cycloalkyl or aryl radicals, in which said substituent is a halogen atom, the alkyl, nitro or cyano radical; a radical of formula -E₁₄RR'R" in which E₁₄ is an element of group 14 and R, R' and R" represent, independently, the hydrogen atom or one of the following substituted (by one or more identical or different substituents) or non-substituted alkyl, cycloalkyl, aryl, alkoxy, cycloalkoxy, aryloxy, alkylthio, cycloalkylthio or arylthio radicals, in which said substituent is a halogen atom, the alkyl, nitro or cyano radical; or a radical of formula -SO₂R'₁₅ in which R'₁₅ represents a halogen atom, an alkyl, haloalkyl or aryl radical optionally substituted by one or more substituents chosen from the alkyl, haloalkyl and halogen radicals.

2. Compounds of general formula 1 as defined in claim 1, **characterised in that** they are presented in the form of a monomer or a dimer.

3. Compounds of general formula 1 as defined in one of claims 1 to 2, **characterised in that**
R_{M} represents a halogen atom;
A and B represent, independently, a carbon chain with 2 to 4 carbon atoms;
L₁, L₂ and L, represent, independently, a radical of formula -E₁₅(R₁₅)- in which E₁₅ is a nitrogen or phosphorus atom and R₁₅ represents an alkyl radical or a radical of formula - E₁₄RR'R" in which E₁₄ represents a carbon or silicon atom and R, R' and R" represent, independently, the hydrogen atom or an alkyl radical.

4. Compounds of general formula 1 as defined in one of claims 1 to 3, **characterised in that** M represents a samarium atom.

5. Compounds of general formula 1 as defined in one of claims 1 to 4, **characterised in that** R_{M} represents a chlorine atom; A and B represent, independently, a carbon chain with 2 carbon atoms; L₁, L₂ and L₃ represent, independently, a radical of formula -E₁₅(R₁₅)- in which E₁₅ is a nitrogen atom and R₁₅ represents a methyl, ethyl, propyl, isopropyl radical or a radical of formula -E₁₄RR'R" in which E₁₄ represents a silicon atom and R, R' and R" represent, independently, the hydrogen atom or a methyl, ethyl, propyl or isopropyl radical.

6. Compounds of general formula 1 as defined in one of claims 1 to 5 and corresponding to the following formula:
- [(Me₃SiNCH₂CH₂)₂NMe]SmCl.

7. Compounds of general formula 1 as defined in claim 6, **characterised in that** they are presented in the form of a dimer.

8. Process for the preparation of the products of general formula 1 as defined in claim 1, **characterized in that** a product of formula I
(L₁-A-L₃-B-L₂)²⁻ , 2Y⁺ (I)
in which L₁, A, L₃, B and L₂ have the meanings indicated in claim 1 and Y represents the hydrogen atom, a metal or an organometallic group of formula R'''M₁ or R'''₃M₂ in which R"' represents a halogen atom or an alkyl, cycloalkyl, aryl, alkoxy, cycloalkoxy or aryloxy radical, M₁ is an alkaline-earth or a zinc or mercury atom and M₂ a tin or lead atom, is reacted with a product of formula II
MR_{M}Z₁Z₂ (II)
in which M and R_{M} have the meanings indicated in claim 1 and Z₁ and Z₂ represent, independently, a parting group selected from a halogen atom, an alkyl, cycloalkyl, alkoxy, aryl, aryloxy, methanesulphonyloxy, benzenesulphonyloxyor or p-toluenesulphonyloxy radical, in order to obtain a product of formula 1.

9. Use of the products of formula 1 as defined in one of claims 1 to 7, as polymerization or copolymerization catalysts.

10. Use according to claim 9 for the polymerization or copolymerization of heterocycles.

11. Use according to claim 9 for the polymerization or copolymerization of cyclic esters.

12. Use according to claim 11 for the polymerization or copolymerization of cyclic esters of lactic and/or glycolic acid.

13. Process for the preparation of random or block copolymers, or polymers which consists of placing a chain initiator and/or regulator, a polymerization catalyst and optionally a polymerization solvent in the presence of one or more monomers, the said process **characterized in that** the chain initiator and/or the regulator and the polymerization catalyst are represented by the same compound which is chosen from the compounds of formula (1) as defined in one of claims 1 to 7.

14. Process according to claim 13, **characterized in that** the monomer is chosen from the epoxides or the cyclic esters.

15. Process according to claim 14, **characterized in that** the monomer is chosen from the cyclic esters of lactic and/or glycolic acid.
